Europäisches Patentamt

European Patent Office

Office européen des brevets

(11) Numéro de publication: **0 296 667**

**A2**

## (12) DEMANDE DE BREVET EUROPEEN

(21) Numéro de dépôt: **88201215.6**

(22) Date de dépôt: **14.06.88**

(51) Int. Cl.⁴: **B60T 11/34**

(30) Priorité: **22.06.87 IT 6753787**

(43) Date de publication de la demande:
**28.12.88 Bulletin 88/52**

(84) Etats contractants désignés:
**DE ES FR GB**

(71) Demandeur: **BENDIX ALTECNA S.p.A.**
**Zona Industriale**
**I-70026 Modugno (Bari)(IT)**

(72) Inventeur: **Battaglino, Domenico**
**Via Giuseppe Verdi 10**
**I-85013 Genzano di Lucania Potenza(IT)**

(74) Mandataire: **Patrito, Pier Franco, Dr. Ing.**
**Cabinet PATRITO BREVETTI Via Don Minzoni**
**14**
**I-10121 Torino(IT)**

(54) Dispositif régulateur de la pression pour une installation de freinage de véhicule.

(57) Un dispositif (12-19) pour le réglage de la pression du liquide dans une installation hydraulique de freinage pour un véhicule, qui est intégré dans une unité hydraulique (1-11) de commande destinée au frein d'une roue arrière de véhicule. L'unité de commande (1-11) comprend deux pistons (9,8) montés à glissement dans l'alésage d'un corps (1) et destinés à actionner les mâchoires du frein. Le premier piston (9) est pourvu de deux garnitures d'étanchéité pour isoler une région centrale (6) de l'alésage du corps (1), qui est en communication avec un raccord d'alimentation (2). Le dispositif (12-19) régulateur de la pression est monté dans le premier piston (9) et il transmet la pression venant de l'installation de freinage à une région de l'alésage du corps (1) qui se trouve entre les deux pistons (8,9), en la soumettant à réglage lors qu'elle dépasse une pression d'intervention préétablie. Le dispositif peut être appliqué soit à des installations de nouveau projet, soit à des installations de freinage existantes, sans exiger d'autres modifications, afin d'y introduire la fonction de réglage de la pression.

FIG. 2

# DISPOSITIF REGULATEUR DE LA PRESSION POUR UNE INSTALLATION DE FREINAGE DE VEHICULE

La présente invention a pour objet un dispositif pour le réglage de la pression du liquide dans une installation hydraulique de freinage pour un véhicule.

Dans les installations de freinage les plus évoluées on poursuit le but d'utiliser de la façon la meilleure l'action des freins d'un véhicule sans courir le danger de bloquer les roues arrière et de provoquer ainsi un dérapage. A cet effet, la pression engendrée par l'actionnement de la pédale de freinage dans l'installation hydraulique qui alimente les unités de commande des freins est toujours envoyée entièrement aux unités de commande des freins des roues avant, tandis que cette pression est envoyée entièrement aux unités de commande des freins des roues arrière seulement tant qu'elle ne dépasse pas un niveau préétabli, et au contraire elle est réduite suivant une loi appropriée lors que la pression engendrée par l'actionnement de la pédale de freinage prend une valeur supérieure audit niveau préétabli. On obtient cet effet de réglage moyennant un dispositif régulateur qui, suivant la technique connue, peut être constitué par un composant spécial inséré sur les tuyaux de l'installation hydraulique, ou bien peut être intégré dans le cylindre principal de l'installation.

Lors que le dispositif régulateur est constitué par un composant spécial, son existence donne lieu à l'augmentation du nombre des composants, de la complexité de l'installation, des difficultés d'installation et du prix de revient. De plus, en général le dispositif régulateur ne peut pas être installé dans une position opportunément protégée; s'agissant d'un composant additionnel, il augmente l'absorption de l'installation et donc la course exigée par la pédale de freinage. D'autre côté, l'intégration du dispositif régulateur dans le cylindre principal de l'installation donne lieu à des complications et frais considérables de construction.

Le but de la présente invention est de perfectionner les installations connues de freinage, soit qu'il s'agit de première installation, soit qu'il s'agit de modification d'une installation existante, de sorte à réaliser l'effet de réglage susdit en employant un nombre minimal de composants de complexité réduite, en réduisant au minimum les difficultés d'installation, le prix de revient et l'absorption de l'installation, et en assurant que tous les composants délicats puissent être installés en des positions opportunément protégées.

Ce but est atteint, suivant l'invention, en ce qu'un dispositif régulateur de la pression est intégré dans une unité hydraulique de commande destinée au frein d'une roue arrière de véhicule.

Grâce à l'application de cette conception, le dispositif régulateur est installé dans une position complètement protégée; il ne constitue pas un composant additionnel, et donc il ne comporte aucune augmentation du nombre des composants ou toute autre complication de l'installation, ni aucune difficulté d'installation ou augmentation de l'absorption complexive de l'installation et, donc, de la course exigée par la pédale de freinage; et il peut être réalisé sous une forme relativement simple et économique.

Ces caractéristiques et autres et les avantages de l'objet de l'invention ressortiront plus clairement de la suivante description d'une forme de réalisation, donnée à titre d'exemple non limitatif et schématiquement représentée à une échelle quelque peu agrandie dans le dessin annexé, dans lequel:

Fig. 1 montre une vue de l'extérieur, du côté du raccord d'alimentation, d'une unité de commande pour frein dans laquelle est intégré le dispositif régulateur de la pression;

Fig. 2 en montre une coupe longitudinale faite suivant la ligne II-II de la figure 1; et

Fig. 3 en montre une coupe transversale faite suivant la ligne III -III de la figure 2.

L'unité de commande pour frein comporte un corps 1 pourvu d'un alésage longitudinal et de deux passages 2 et 3 qui sont en communication avec la région centrale 6 de l'alésage. Les passages 2 et 3 se terminent vers l'extérieur en formant, respectivement, un raccord d'alimentation et un raccord de vidange. Dans le raccord d'alimentation on a représenté un capuchon provisoire de protection 4, qui doit être emporté lors de l'installation de l'unité. Dans le raccord de vidange est insérée une soupape normalement fermée 5, laquelle peut être ouverte pour procéder à la vidange de l'air retenu dans l'intérieur de l'unité. Le corps 1 montre encore des trous filetés 7 pour son montage mécanique sur l'ensemble du frein.

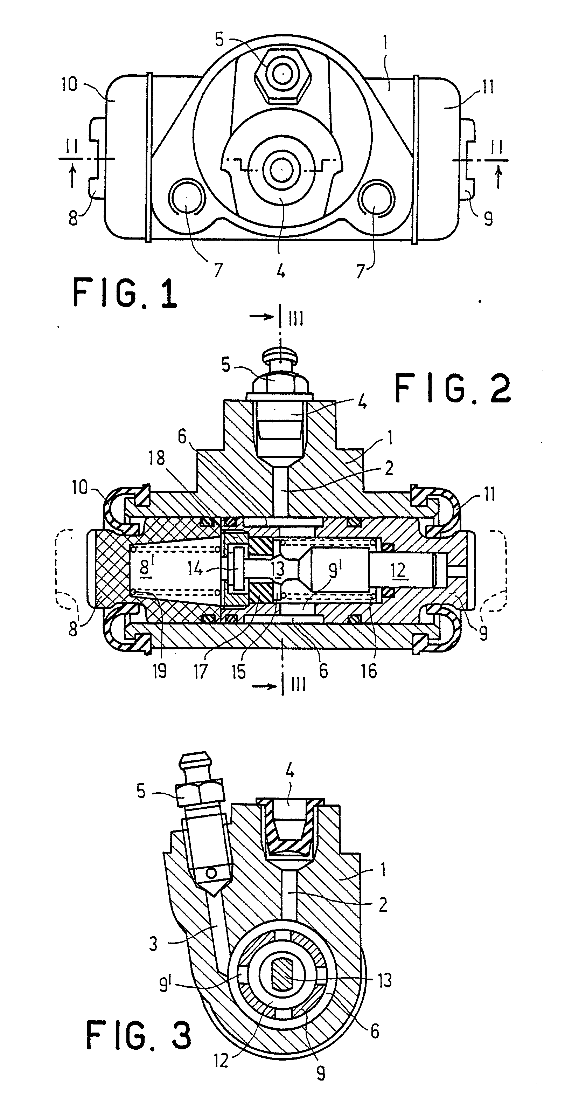

Dans les deux extrémités de l'alésage du corps 1 sont insérés deux pistons 8 et 9 pourvus de garnitures d'étanchéité. Les pistons 8 et 9 peuvent glisser dans l'alésage du corps 1 entre les positions montrées, dans la figure 2, respectivement par des lignes continues et par des lignes interrompues, afin de commander les mâchoires du frein. Chaque piston 8, 9 est raccordé au corps 1 par une coiffe en matière élastomère, respectivement 10 et 11, pour protéger les surfaces de glissement. La disposition des parties décrites jusqu'ici correspond à celle habituelle des unités de commande pour freins. La pression existante dans la région de l'alésage du corps 1 qui se trouve entre les pistons 8 et 9 est la pression utile pour la commande du freinage.

Dans l'application de l'invention, le dispositif régulateur est installé dans l'unité décrite, et plus particulièrement à l'intérieur des pistons 8 et 9, dont la forme est modifiée à cet effet par rapport à la forme habituelle.

Le premier piston 9 est creux et sa cavité est en communication, par des ouvertures 9', avec la région centrale 6 de l'alésage du corps 1. Les garnitures d'étanchéité du piston 9 sont deux et elles sont disposées, en direction longitudinale, des deux côtés des ouvertures 9', de sorte qu'elles isolent ladite région centrale 6 de l'alésage du corps 1. Dans la cavité du piston 9 est introduit, de sorte à pouvoir glisser de façon étanche grâce à une garniture annulaire, un plongeur 12 prolongé par une tige 13. La tige 13 porte à son extrémité une tête de soupape 14 et elle est pourvue de bras 15 sur lesquels agit un ressort 16 disposé dans la cavité du piston 9. Dans cette même cavité est aussi inséré de façon étanche, entre la tête de soupape 14 et les bras 15, un anneau de garniture 17 qui forme un siège pour la tête de soupape 14 et qui a un trou central dans lequel passe avec du jeu la tige 13. La cavité du piston 9 est limitée, vers le deuxième piston 8, par un organe 18 qui, dans ce cas, est constitué par une douille filetée ayant une ouverture centrale. Un ressort 19, monté dans une cavité 8' du piston 8, prend appui sur ledit organe 18 et tend à éloigner l'un par rapport à l'autre les deux pistons 8 et 9. La cavité 8' du deuxième piston 8 est en communication avec la région de l'alésage du corps 1 qui se trouve entre les deux pistons 8 et 9.

Lors que la tête de soupape 14 est en contact avec l'anneau de garniture 17, elle donne lieu à une surface de fermeture qui sera indiquée par $A_1$. La surface utile du plongeur 12, déterminée par le diamètre sur lequel travaille la garniture disposée entre ce plongeur et le piston 9, sera indiquée par $A_2$. La pression engendrée dans l'installation hydraulique de freinage par l'actionnement de la pédale de freinage, laquelle est envoyée entièrement d'un côté à actionner les freins des roues avant, et d'autre côté au passage 2, sera indiquée par $P_1$. La pression existante dans la cavité 8' du piston 8, laquelle agit entre les pistons 8 et 9 et forme la pression utile pour l'actionnement des freins des roues arrière, sera indiquée par $P_2$. La pression d'intervention, à savoir la pression à partir de laquelle on veut que le dispositif régulateur réduise la pression utilisée pour l'actionnement des freins des roues arrière, par rapport à la pression existante dans l'installation hydraulique de freinage et utilisée pour l'actionnement des freins des roues avant, sera indiquée par $P_i$. Enfin, la force appliquée par le ressort 16 aux bras 15 de la tige 13 du plongeur 12 sera indiquée par F. Lors du projet du dispositif régulateur, la force F du ressort 16 doit être choisie, par rapport à la pression d'intervention $P_i$ et à la surface utile $A_2$ du plongeur 12, de sorte à satisfaire la relation : $F = P_i \times A_2$.

Le fonctionnement de ce dispositif est le suivant.

La pression $P_1$ engendrée dans l'installation hydraulique de freinage par l'actionnement de la pédale de freinage arrive, par le raccord d'alimentation et le passage 2, à la région centrale 6 de l'alésage du corps 1 du dispositif. A partir de cette région centrale 6, jusqu'à ce que la tête de soupape 14 ne fait pas fermeture sur l'anneau de garniture 17, la pression $P_1$ passe entièrement, à travers le trou de l'anneau de garniture 17 autour de la tige 13, l'espace axial entre l'anneau de garniture 17 et la tête de soupape 14 et l'ouverture de la douille filetée 18, jusqu'à la cavité 8' du piston 8. Dans ces conditions on a donc $P_2 = P_1$ : la pression utilisée pour l'actionnement des freins des roues arrière est toute entière la pression existante dans l'installation hydraulique de freinage.

Jusqu'à ce que la pression $P_1$ venant de l'installation de freinage, multipliée par la surface utile $A_2$ du plongeur 12, donne lieu à une force plus faible de la force F du ressort 16, le plongeur 12 et la tête de soupape 14 qui lui est solidaire par la tige 13 ne se déplacent pas: le passage décrit ci-dessus demeure ouvert et la condition indiquée ne change pas. Mais, lors que la pression $P_1$ venant de l'installation de freinage, en augmentant, dépasse la valeur d'intervention $P_i$ ci-dessus précisée, la force F du ressort 16 est surmontée par la pression hydraulique et le plongeur 12 se déplace (vers la droite suivant la figure 2). La tête de soupape 14 prend appui sur l'anneau de garniture 17 en faisant fermeture sur lui. De ce moment, la relation précédente $P_2 = P_1$ n'est plus valable. Dans ces nouvelles conditions, l'organe 12-13-14 est en équilibre sous la sollicitation d'une première force hydraulique $P_2 \times A_1$ qui tend à le déplacer dans le sens de la fermeture de la soupape 14-17, d'une deuxième force hydraulique $P_1 \times (A_1 - A_2)$ qui tend à le déplacer dans le sens de l'ouverture de la soupape 14-17, et d'une troisième forme, mécanique celle-ci, $F = P_i \times A_2$, laquelle également tend à le déplacer dans le sens de l'ouverture de la soupape 14-17. Dans ces conditions, la pression $P_2$ qui s'établit dans la cavité 8' du piston 8, et qui agit sur les pistons 8 et 9 et donc sur les mâchoires du frein, augmente avec l'augmentation de la pression $P_1$ existante dans l'installation hydraulique de freinage, mais en une mesure réduite, et plus précisément de sorte à respecter le suivant rapport de réduction :

$$(P_2 - P_i) / (P_1 - P_i) = (A_1 - A_2) / A_1 .$$

Comme on le voit, donc, le dispositif réduit automatiquement, suivant une loi préétablie laquelle dépend des caractéristiques de projet, la pression qui, venant de l'installation de freinage, est admise à actionner l'unité de commande des freins des roues arrière, lors que cette pression dépasse la pression d'intervention, elle aussi établie par des caractéristiques de projet.

Une unité de commande suivant l'invention peut simplement remplacer une unité précédente habituelle, dans une installation de freinage existante qui ne demande aucune autre modification, dans le but d'y introduire la fonction de réglage de la pression utilisée pour l'actionnement des freins des roues arrière. Suivant l'état de la technique précédente, au contraire, l'introduction de cette fonction dans une installation existante aurait demandé l'interruption des tuyaux de l'installation et l'insertion d'un dispositif régulateur additionnel, ou bien le remplacement du cylindre principal de l'installation de freinage.

Toutefois, l'application de l'invention est avantageuse aussi dans les installations de freinage de nouveau projet, en tant qu'elle assure une facilité d'installation des composants, un nombre réduit de composants par rapport à l'emploi d'un dispositif régulateur séparé, ou bien une simplification des composants par rapport à l'emploi d'un cylindre principal incorporant le régulateur, une protection complète des dispositifs régulateurs incorporés dans les unités de commande des freins, l'élimination de toute raison additionnelle d'augmentation de l'absorp tion de l'installation, et donc de la course exigée par la pédale de freinage, et somme toute des frais plus réduits de fabrication et d'installation.

Il va de soi que certaines modifications sont possibles. Par exemple, la douille filetée 18 pourrait être remplacée per un anneau calé ou par un autre élément fixé par sertissage ou autrement.

## Revendications

1 . Dispositif pour le réglage de la pression du liquide dans une installation hydraulique de freinage pour un véhicule, caractérisé. en ce qu'un dispositif (12-19) régulateur de la pression est intégré dans une unité hydraulique (1-11) de commande destinée au frein d'une roue arrière de véhicule.

2 . Dispositif de réglage suivant la revendication 1, caractérisé en ce que l'unité de commande (1-11) comprend deux pistons (9,8) montés à glissement dans l'alésage d'un corps (1) et destinés à actionner les mâchoires du frein, le premier (9) desdits pistons est pourvu de deux garnitures d'étanchéité lesquelles isolent une région centrale (6) de l'alésage du corps (1) qui est en communication avec un raccord d'alimentation (2) destiné à être connecté à l'installation de freinage, et le dispositif (12-19) régulateur de la pression est monté dans ledit premier piston (9) de sorte a transmettre la pression venant de l'installation de freinage et existante dans ladite région centrale (6) de l'alésage du corps (1) à une région de l'alésage du corps (1) qui se trouve entre les deux pistons (8,9), en soumettant cette pression à un réglage.

3 . Dispositif de réglage suivant la revendication 2, caractérisé en ce que le dispositif régulateur (11-19) comprend un plongeur (12) inséré dans ledit premier piston (9) de sorte à pouvoir glisser de façon étanche, ce plongeur (12) étant poussé par un premier ressort (16) et étant solidaire d'une tête de soupape (14) disposeé pour faire fermeture, lors que le plongeur (12) est déplacé contre l'action dudit ressort (16), contre un anneau de garniture (17) disposé entre ladite région centrale (6) de l'alésage et ladite région de l'alésage qui se trouve entre les deux pistons (8,9); la section utile (A₂) dudit plongeur (12) et la force (F) du ressort (16) étant choisies, par rapport à la valeur (P₁) de la pression, à partir de laquelle doit avoir lieu l'intervention du dispositif régulateur, de sorte à satisfaire la relation : F = P₁ x A₂ .

4 . Dispositif de réglage suivant la revendication 3, caractérisé en ce que ladite région de l'alésage du corps (1), qui se trouve entre les deux pistons (8,9), est en communication avec une cavité (8′) du deuxième piston (8), laquelle contient un deuxième ressort (19) qui applique une force de répulsion entre les deux pistons (8,9).

5 . Dispositif de réglage suivant la revendication 3, caractérisé en ce que ledit plongeur (12) est connecté à ladite tête de soupape (14) per une tige (13) traversant ledit anneau de garniture (17) et pourvu de bras (15) sur lesquels agit ledit premier ressort (16); et qu'une douille (18) avec trou central est disposée pour limiter la cavité dudit premier piston (9) incluant le dispositif régulateur (12-17), du côté faisant face au deuxième piston (8).

FIG. 1

FIG. 2

FIG. 3